# EUROPEAN PATENT SPECIFICATION

(11) **EP 3 350 743 B1**
(45) Date of publication and mention of the grant of the patent: **05.05.2021**
(21) Application number: 16766173.5
(22) Date of filing: 01.09.2016
(51) Int. Cl.: G06F 21/57, G06F 9/445

(54) **SECURE TRANSACTION MANAGEMENT TECHNIQUES**
VERFAHREN FÜR SICHERE TRANSAKTIONSVERWALTUNG
TECHNIQUES DE GESTION DE TRANSACTION SÉCURISÉE

(30) Priority: 19.09.2015 US 201514859275
(43) Date of publication of application: 25.07.2018
(73) Proprietor: Qualcomm Incorporated, San Diego, CA 92121-1714 (US)
(72) Inventor: BENOIT, Olivier Jean, San Diego, California 92121-1714 (US); KANG, Seung Hyuk, San Diego, California 92121-1714 (US)
(74) Representative: Tomkins & Co
(86) International application number: PCT/US2016/049886
(87) International publication number: WO 2017/048521

(56) References cited:
- WO-A1-92/04716
- WO-A2-03/025742
- US-A1- 2008 320 263

## Description

### INTRODUCTION

This disclosure relates generally to electronics, and more specifically, but not exclusively, to methods and apparatuses that relate to secure transactions.

As digital mobile technologies have evolved, mobile devices, such as smartphones, tablet computers, and smart watches, are more frequently being used to perform transactions that must be secure in order to protect a user's privacy. There is market demand for secure transaction techniques that are faster, use less power, are less vulnerable to hacking, are less expensive, or a combination thereof.

Accordingly, there are previously unaddressed and long-felt industry needs for methods and apparatus that improve upon conventional methods and apparatus, including the provided improved methods and improved apparatus. US2008320263 provides an anti-replay protection of data in a fault tolerant manner.

### SUMMARY

This summary provides a basic understanding of some aspects of the present teachings. This summary is not exhaustive in detail, and is neither intended to identify all critical features, nor intended to limit the scope of the claims.

Exemplary methods and apparatus updating a non-volatile random access memory (NV-RAM) are provided. In an example, the method includes storing original data in a non-volatile memory (NVM) region of the NV-RAM and copying the original data to a random access memory (RAM) region of the NV-RAM. The NVM region and the RAM region are different regions. The method also includes computing updated data from the original data, storing the updated data in the RAM region, validating an updated flag in the RAM region, copying the updated data to the NVM region, and invalidating the updated flag in the RAM region. In an example, the method can also include determining, after an interruption, a status of the updated flag in the RAM region. If the status of the updated flag is valid, then the updated data is copied to the NVM region and the updated flag in the RAM region is invalidated. The interruption can be a power loss to the NV-RAM, a power loss to a memory management device, a power loss to a processor, a reboot, a reset, or a combination thereof. Moreover, the method can further include determining, after an interruption, a status of the updated flag in the RAM region. The updated flag indicates completion of a specific update stage in a plurality of update stages. If the status of the updated flag is valid, then the updated data is copied to the NVM region and the updated flag in the RAM region is invalidated. The NVM region is associated with the specific update stage the RAM region is associated with the specific update stage. In an example, the method can also include performing an update in a subsequent update stage in the plurality of update stages. In an example, the interruption can be a power loss to the NV-RAM, a power loss to a memory management device, a power loss to a processor, a reboot, a reset, or a combination thereof. In an example, the updated flag indicates completion of a specific update stage in a plurality of update stages. In an example, the method can also include partitioning the NV-RAM into the NVM region and the RAM region. In an example, the original data can be secure transaction data, the updated data is secure transaction data, or a combination thereof.

In a further example, provided is a non-transitory computer-readable medium, comprising processor-executable instructions stored thereon that are configured to cause a processor to execute at least a part of the aforementioned method. The non-transitory computer-readable medium can be integrated with a device, such as a mobile device, a base station, a set-top box, a music player, a video player, an entertainment device, a navigation device, a communications device, a fixed location data device, a computer, or a combination thereof.

In another example, provided is an apparatus configured to update a non-volatile random access memory (NV-RAM). The apparatus includes means for storing original data in a non-volatile memory (NVM) region of the NV-RAM and means for copying the original data to a random access memory (RAM) region of the NV-RAM The NVM region and the RAM region are different regions. The apparatus also includes means for computing updated data from the original data, means for storing the updated data in the RAM region, means for validating an updated flag in the RAM region, means for copying the updated data to the NVM region, and means for invalidating the updated flag in the RAM region. The apparatus can also include means for determining, after an interruption, a status of the updated flag in the RAM region, as well as means for copying, if the status of the updated flag is valid, the updated data to the NVM region and means for invalidating, if the status of the updated flag is valid, the updated flag in the RAM region. The apparatus can also include means for determining, after an interruption, a status of the updated flag in the RAM region, means for copying, if the status of the updated flag is valid, the updated data to the NVM region and means for invalidating, if the status of the updated flag is valid, the updated flag in the RAM region. The updated flag indicates completion of a specific update stage in a plurality of update stages, the NVM region is associated with the specific update stage, and the RAM region is associated with the specific update stage. In an example, the updated flag indicates completion of a specific update stage in a plurality of update stages. At least a part of the apparatus can be integrated in a semiconductor die. Further, at least a part of the apparatus can be a device, such as a mobile device, a base station, a set-top box, a music player, a video player, an entertainment device, a navigation device, a communications device, a fixed location data device, a computer, or a combination of the foregoing. In a further example, provided is a non-transitory computer-readable medium, comprising lithographic device-executable instructions stored thereon that are configured to cause a lithographic device to fabricate at least a part of the apparatus.

In another example, provided is an apparatus configured to update a non-volatile random access memory (NV-RAM). The apparatus can include a processor and a memory coupled to the processor. In an example, the apparatus can include the NV-RAM coupled to the processor. The NV-RAM is configured with a non-volatile memory (NVM) region and a random access memory (RAM) region. The NVM region and the RAM region are different regions. The memory is configured to cause the processor to store original data in a non-volatile memory (NVM) region of the NV-RAM, copy the original data to a random access memory (RAM) region of the NV-RAM, compute updated data from the original data, store the updated data in the RAM region, validate an updated flag in the RAM region, copy the updated data to the NVM region, and invalidate the updated flag in the RAM region. In an example, the memory is further configured to cause the processor to determine, after an interruption, a status of the updated flag in the RAM region, as well as, if the status of the updated flag is valid, then copying the updated data to the NVM region and invalidating the updated flag in the RAM region. In an example, the interruption is a power loss to the NV-RAM, a power loss to a memory management device, a power loss to a processor, a reboot, a reset, or a combination thereof. In an example, the memory is further configured to cause the processor to determine, after an interruption, a status of the updated flag in the RAM region, as well as to copy, if the status of the updated flag is valid, the updated data to the NVM region, and invalidate the updated flag in the RAM region. The updated flag indicates completion of a specific update stage in a plurality of update stages, the NVM region is associated with the specific update stage, and the RAM region is associated with the specific update stage. In an example, the memory is further configured to cause the processor to perform an update in a subsequent update stage in the plurality of update stages. In an example, the interruption is a power loss to the NV-RAM, a power loss to a memory management device, a power loss to a processor, a reboot, a reset, or a combination thereof. In another example, the updated flag indicates completion of a specific update stage in a plurality of update stages. In an example, the memory is further configured to cause the processor to partition the NV-RAM into the NVM region and the RAM region. In another example, the original data is secure transaction data, the updated data is secure transaction data, or a combination thereof. In an example, the at least a part of the processor is integrated on a semiconductor die. In an example, the apparatus can be at least one of a base station or a mobile device, with which the processor is integrated. In an example, the apparatus is a mobile device, a music player, a video player, an entertainment unit, a navigation device, a communications device, a tablet, a computer, or a combination thereof. In an example, the processor is a microprocessor, a microcontroller, a digital signal processor, a field programmable gate array, a programmable logic device, an application-specific integrated circuit, a controller, a non-generic special-purpose processor, a state machine, gated logic, a discrete hardware component, a dedicated hardware finite state machine, or a combination thereof. In an example, the NV-RAM is a spin transfer torque magnetoresistive random access memory. In an example, the NV-RAM is a ferroelectric RAM In a further example, provided is a non-transitory computer-readable medium, comprising lithographic device-executable instructions stored thereon that are configured to cause a lithographic device to fabricate at least a part of the apparatus.

The foregoing broadly outlines some of the features and technical advantages of the present teachings in order that the detailed description and drawings can be better understood. Additional features and advantages are also described in the detailed description. The conception and disclosed examples can be used as a basis for modifying or designing other devices for carrying out the same purposes of the present teachings. Such equivalent constructions do not depart from the technology of the teachings as set forth in the claims. The inventive features that are characteristic of the teachings, together with further objects and advantages, are better understood from the detailed description and the accompanying drawings. Each of the drawings is provided for the purpose of illustration and description only, and does not limit the present teachings.

### BRIEF DESCRIPTION OF THE DRAWINGS

The accompanying drawings are presented to describe examples of the present teachings, and are not limiting.
FIG. 1 depicts an exemplary wireless communication network.
FIG. 2 depicts an exemplary functional block diagram of an exemplary user device.
FIG. 3 depicts an exemplary technique for backing up a non-volatile random access memory.
FIG. 4 depicts another exemplary technique for backing up a non-volatile random access memory.
FIG. 5 depicts another exemplary technique for backing up a non-volatile random access memory.
FIG. 6 depicts a simplified block diagram of an exemplary apparatus configured to provide or otherwise support techniques provided herein.

In accordance with common practice, the features depicted by the drawings may not be drawn to scale. Accordingly, the dimensions of the depicted features may be arbitrarily expanded or reduced for clarity. In accordance with common practice, some of the drawings are simplified for clarity. Thus, the drawings may not depict all components of a particular apparatus or method. Further, like reference numerals denote like features throughout the specification and drawings.

### DETAILED DESCRIPTION

### INTRODUCTION

Methods and apparatuses that relate to secure transactions are provided. Exemplary secure transactions include secure financial transactions, such as paying at a point-of-sale terminal and ticketing.

Conducting a secure transaction can include performing a computation, such as encrypting data to be transmitted, decrypting received data, calculating a new account balance (e.g., a credit card balance, a bank account balance, a frequent user points balance, or the like). The computation can form a basis for making a decision, such as to accept performing an act (e.g., a credit card charge is approved), to deny performing an act (e.g., denying entry into a venue), or the like. Then, the computation results, decision results, other related data, the like, or a combination thereof can be stored in a storage medium that is tangible, non-transient, and non-volatile (e.g., a memory, such as a non-volatile random access memory (NV-RAM), or the like). The storage medium can be a stand-alone device (e.g., a removable chip, a removable card, the like, or a combination thereof), integrated with a device that is configured to use the storage media, embedded within a device that is configured to use the storage media, or a combination thereof. In examples, the storage media can be integrated with a processor, a controller, an application specific integrated circuit (ASIC), a system-on-chip (SoC), like devices, or a combination thereof.

In an example, the storage medium is an NV-RAM that retains its stored contents when power is removed from the NV-RAM The NV-RAM can be a magnetoresistive-RAM (MRAM). MRAM has fast performance and essentially unlimited write endurance. The NV-RAM can be a variation of MRAM known as Spin Transfer Torque Magnetoresistive Random Access Memory (STT-MRAM). STT-MRAM uses electrons that become spin-polarized as the electrons pass through a thin film (i.e., a spin filter). STT-MRAM is also known as Spin Transfer Torque RAM (STT-RAM), Spin Torque Transfer Magnetization Switching RAM (Spin-RAM), and Spin Momentum Transfer (SMT-RAM). In a further example, the NV-RAM can be a ferroelectric RAM that stores data using a thin ferroelectric material, such as lead-zirconium titanate (PZT).

Exemplary methods and apparatus for updating NV-RAM are provided. An exemplary method includes storing original data, such as secure transaction data, in a non-volatile memory (NVM) region of the NV-RAM, and copying the original data to a random access memory (RAM) region of the NV-RAM The method also includes computing updated data from the original data, storing the updated data in the RAM region, validating an updated flag in the RAM region, copying the updated data to the NVM region, and invalidating the updated flag in the RAM region. The "updated flag" indicates if an update of the original data is being performed. Because the updated flag is stored in non-volatile memory, an interruption to the update process, such as a power loss, does not affect the status of the updated flag (e.g., set or reset the flag). The method can also include determining, after an interruption, a status of the updated flag and, if the status of the updated flag is valid, then copying the updated data to the NVM region and invalidating the updated flag. The updated flag can indicate completion of a specific update stage in a plurality of update stages.

At least one of the exemplary apparatuses and/or exemplary methods disclosed herein advantageously addresses the long-felt industry needs, as well as other previously unidentified needs, and mitigates shortcomings of the conventional methods and the conventional apparatus. For example, at least one advantage provided by at least one example of the disclosed apparatuses, and/or at least one example of the methods disclosed herein, is an improvement in speed over conventional devices, using less power, being less vulnerable to hacking, being less expensive to fabricate, being more reliable, being compatible with advanced complimentary-metal-oxide-semiconductor (CMOS) processes, being simple, being more secure, having no static power dissipation, having faster write times (e.g., 2x-3x faster), having fast recovery times from a power interruption, lower energy consumption, or a combination thereof.

Examples are disclosed in this application's text and drawings. Alternate examples can be devised without departing from the scope of the disclosure. Additionally, conventional elements of the current teachings may not be described in detail, or may be omitted, to avoid obscuring aspects of the current teachings.

### ABBREVIATIONS

The following exemplary list of abbreviations, acronyms, and terms is provided to assist in comprehending the current disclosure, and are not provided as limitations.
ASIC - Application-specific integrated circuit
CMOS - Complimentary-metal-oxide-semiconductor
DL - Downlink
DSP - Digital signal processor
EEPROM - Electrically-erasable programmable read-only memory
FPGA - Field-programmable gate array
NV-RAM - Non-volatile random access memory
NVM - Non-volatile memory
MRAM - Magnetoresistive -random access memory
PLD - Programmable logic device
RAM - Random access memory
STT-MRAM - Spin Transfer Torque Magnetoresistive Random Access Memory
UE - User Equipment
UL - Uplink

As used herein, the term "exemplary" means "serving as an example, instance, or illustration." Any example described as "exemplary" is not necessarily to be construed as preferred or advantageous over other examples. Likewise, the term "examples" does not require that all examples include the discussed feature, advantage, or mode of operation. Use of the terms "in one example," "an example," "in one feature," and/or "a feature" in this specification does not necessarily refer to the same feature and/or example. Furthermore, a particular feature and/or structure can be combined with one or more other features and/or structures. Moreover, at least a portion of the apparatus described hereby can be configured to perform at least a portion of a method described hereby.

It should be noted that the terms "connected," "coupled," and any variant thereof, mean any connection or coupling between elements, either direct or indirect, and can encompass a presence of an intermediate element between two elements that are "connected" or "coupled" together via the intermediate element. Coupling and connection between the elements can be physical, logical, or a combination thereof. Elements can be "connected" or "coupled" together, for example, by using one or more wires, cables, printed electrical connections, electromagnetic energy, and the like. The electromagnetic energy can have a wavelength at a radio frequency, a microwave frequency, a visible optical frequency, an invisible optical frequency, and the like, as practicable. These are several non-limiting and non-exhaustive examples.

The term "signal" can include any signal such as a data signal, an audio signal, a video signal, a multimedia signal, an analog signal, a digital signal, and the like. Information and signals described herein can be represented using any of a variety of different technologies and techniques. For example, data, an instruction, a process step, a process block, a command, information, a signal, a bit, a symbol, and the like that are references herein can be represented by a voltage, a current, an electromagnetic wave, a magnetic field, a magnetic particle, an optical field, an optical particle, and/or any practical combination thereof, depending at least in part on the particular application, at least in part on the desired design, at least in part on the corresponding technology, and/or at least in part on like factors.

A reference using a designation such as "first," "second," and so forth does not limit either the quantity or the order of those elements. Rather, these designations are used as a convenient method of distinguishing between two or more elements or instances of an element. Thus, a reference to first and second elements does not mean that only two elements can be employed, or that the first element must necessarily precede the second element. Also, unless stated otherwise, a set of elements can comprise one or more elements. In addition, terminology of the form "at least one of: A, B, or C" or "one or more of A, B, or C" or "at least one of the group consisting of A, B, and C" used in the description or the claims can be interpreted as "A or B or C or any combination of these elements." For example, this terminology can include A, or B, or C, or A and B, or A and C, or B and C, or A and B and C, or 2A, or 2B, or 2C, and so on.

The terminology used herein is for the purpose of describing particular examples only and is not intended to be limiting. As used herein, the singular forms "a," "an," and "the" include the plural forms as well, unless the context clearly indicates otherwise. In other words, the singular portends the plural, where practicable. Further, the terms "comprises," "comprising," "includes," and "including," specify a presence of a feature, an integer, a step, a block, an operation, an element, a component, and the like, but do not necessarily preclude a presence or an addition of another feature, integer, step, block, operation, element, component, and the like.

In at least one example, the provided apparatuses can be a part of, and/or coupled to, an electronic device such as, but not limited to, at least one of: a mobile device, a navigation device (e.g., a global positioning system receiver), a wireless device, a camera, an audio player, a camcorder, a computer, and a game console.

The term "mobile device" can describe, and is not limited to: a mobile phone, a smartwatch, a mobile communication device, a pager, a personal digital assistant, a personal information manager, a personal data assistant, a mobile hand-held computer, a portable computer, a tablet computer, a wireless device, a wireless modem, other types of portable electronic devices typically carried by a person and having communication capabilities (e.g., wireless, cellular, infrared, short-range radio, etc.), the like, or a combination thereof. Further, the terms "user equipment" (UE), "mobile terminal," "user device," "mobile device," and "wireless device" can be interchangeable.

### DESCRIPTION OF THE DRAWINGS

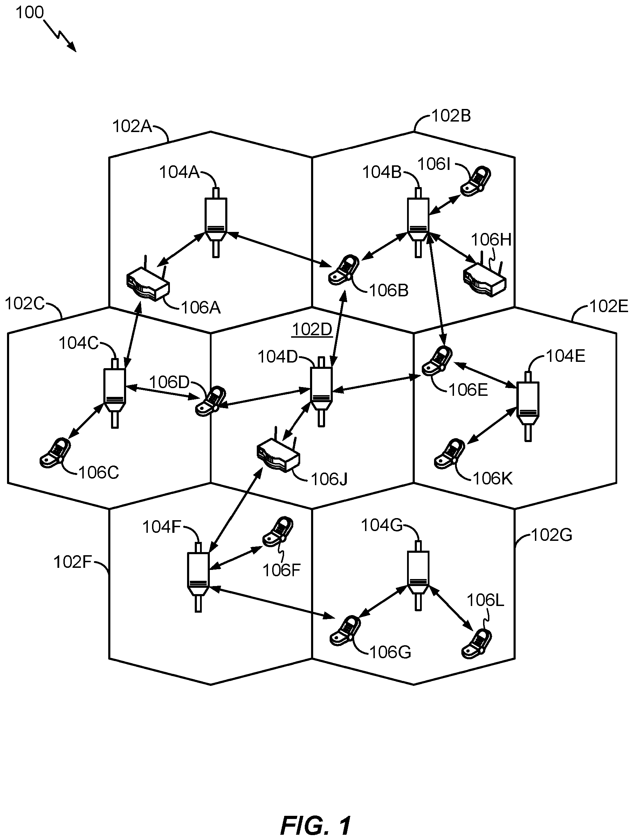

FIG. 1 depicts an exemplary wireless communication network 100. The wireless communication network 100 is configured to support multiple access communication between multiple users. As shown, the wireless communication network 100 can be divided into one or more cells 102A-102G. One or more access points 104A-104G provide communication coverage in corresponding cells 102A-102G. The access points 104A-104G can interact with at least one user device in a plurality of user devices 106A-106L. In an example, at least one of the user devices 106A-106L or the access points 104A-104G is configured to perform a least a portion of the method for updating a non-volatile memory, as described herein.

Each user device 106A-106L can communicate with one or more of the access points 104A-104G via a downlink (DL) and/or an uplink (UL). In general, a DL is a communication link from an access point to a user device, while an UL is a communication link from a user device to an access point. The access points 104A-104G can be coupled to each other and/or other network equipment via wired or wireless interfaces, allowing the access points 104A-104G to communicate with each other and/or the other network equipment. Accordingly, each user device 106A-106L can also communicate with another user device 106A-106L via one or more of the access points 104A-104G. For example, the user device 106J can communicate with the user device 106H in the following manner: the user device 106J can communicate with the access point 104D, the access point 104D can communicate with the access point 104B, and the access point 104B can communicate with the user device 106H, allowing communication to be established between the user device 106J and the user device 106H.

A wireless communication network, such as the wireless communication network 100, can provide service over a geographic region ranging from small to large. For example, the cells 102A-102G can cover a few blocks within a neighborhood or several square miles in a rural environment. In some systems, each of the cells 102A-102G can be further divided into one or more sectors (not shown in FIG. 1). In addition, the access points 104A-104G can provide the user devices 106A-106L, within their respective coverage areas (i.e., respective cells 102A-102G), with access to other communication networks, such as at least one of the Internet, a cellular network, a private network, and the like. In the example shown in FIG. 1, the user devices 106A, 106H, and 106J comprise routers, while the user devices 106B-106G, 1061, 106K, and 106L comprise mobile devices. However, each of the user devices 106A-106L can comprise any suitable communication device.

At least a portion of the apparatus disclosed herein can be a part of at least one of the access points 104A-104G. Further, at least a portion of the apparatus disclosed herein can be a part of at least one of the user devices 106A-106L. Also, at least a portion of the methods disclosed herein can be performed by at least one of the access points 104A-104G. At least a portion of the methods disclosed herein can be performed by at least one of the user devices 106A-106L. Further, embodiments of the disclosure can be practicably employed in a device configured to process data relating to a secure transaction.

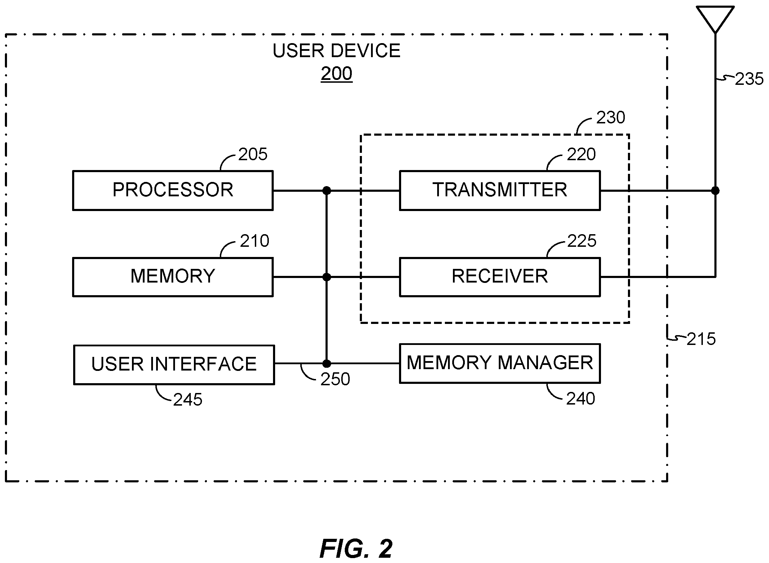

FIG. 2 depicts an exemplary functional block diagram of an exemplary user device 200, which can correspond to at least one of the user devices 106A-106L. FIG. 2 also depicts different components that can a part of the user device 200. At least a portion of the apparatus disclosed herein can be a part of the user device 200. In an example, the user device 200 is configured to perform a least a portion of the method for updating a non-volatile memory, as described herein.

The user device 200 can include a processor 205 which is configured to control operation of the user device 200, including performing at least a part of a method described herein. The processor 205 can also be referred to as a central processing unit (CPU), a special-purpose processor, or both. A memory 210, which can include at least one of read-only memory (ROM) or random access memory (RAM), provides at least one of instructions or data to the processor 205. The processor 205 can perform logical and arithmetic operations based on processor-executable instructions stored within the memory 210. The instructions stored in the memory 210 can be executed to implement at least a part of a method described herein. In examples, at least a portion of the memory 210 can be a storage medium, such as an NV-RAM, as described herein.

The processor 205 can comprise or be a component of a processing system implemented with one or more processors. The one or more processors can be implemented with a microprocessor, a microcontroller, a digital signal processor (DSP), a field programmable gate array (FPGA), a programmable logic device (PLD), an application-specific integrated circuit (ASIC), a controller, a state machine, gated logic, a discrete hardware component, a dedicated hardware finite state machine, any other suitable entity that can at least one of manipulate information (e.g., calculating, logical operations, and the like), control another device, the like, or a combination thereof. The processing system can also include a non-transitory machine-readable media (e.g., the memory 210) that stores software. Software can mean any type of instructions, whether referred to as at least one of software, firmware, middleware, microcode, hardware description language, the like, or a combination thereof. Instructions can include code (e.g., in source code format, binary code format, executable code format, or any other suitable code format). The instructions are processor-executable and are configured to perform at least a portion of a method described hereby. The instructions, when executed by the processor 205, can transform the processor 205 into a special-purpose processor that causes the processor to perform at least a part of a function described hereby.

The user device 200 can also include a housing 215. The user device 200 can also include a transmitter 220, a receiver 225, or a combination thereof that are configured to communicate information between the user device 200 and a remote location. The transmitter 220 and the receiver 225 can be combined into a transceiver 230. An antenna 235 can be attached to the housing 215. The antenna 235 can be electrically coupled to the transmitter 220, the receiver 225, or a combination thereof. The user device 200 can also include (not shown in FIG. 2) multiple transmitters, multiple receivers, multiple transceivers, and/or multiple antennas.

The user device 200 can further comprise a memory manager 240 that is configured to process information (e.g., data) that is to be stored in the memory 210, information (e.g., data) that is stored in the memory 210, information (e.g., data) that is to be retrieved from the memory 210, information (e.g., data) that is retrieved from the memory 210, or a combination thereof. In an example, at least a portion of the memory manager 240 can be integrated in the processor 205. The memory manager 240 can be configured to partition the memory 210 into different partitions. Further, the memory manager 240 can be configured to determine where in the memory 210 that certain data is to be stored when data is written to the memory 210.

The user device 200 can also further comprise a user interface 245. The user interface 245 can comprise a keypad, a microphone, a speaker, a display, the like, or a combination thereof. The user interface 245 can include a component that at least one of conveys information to a user of the user device 200 and receives information from the user of the user device 200.

The components of the user device 200 can be coupled together by a bus system 250. The bus system 250 can include a data bus, a power bus, a control signal bus, a status signal bus, the like, or a combination thereof. The components of the user device 200 can be coupled together to communicate with each other using a different suitable mechanism.

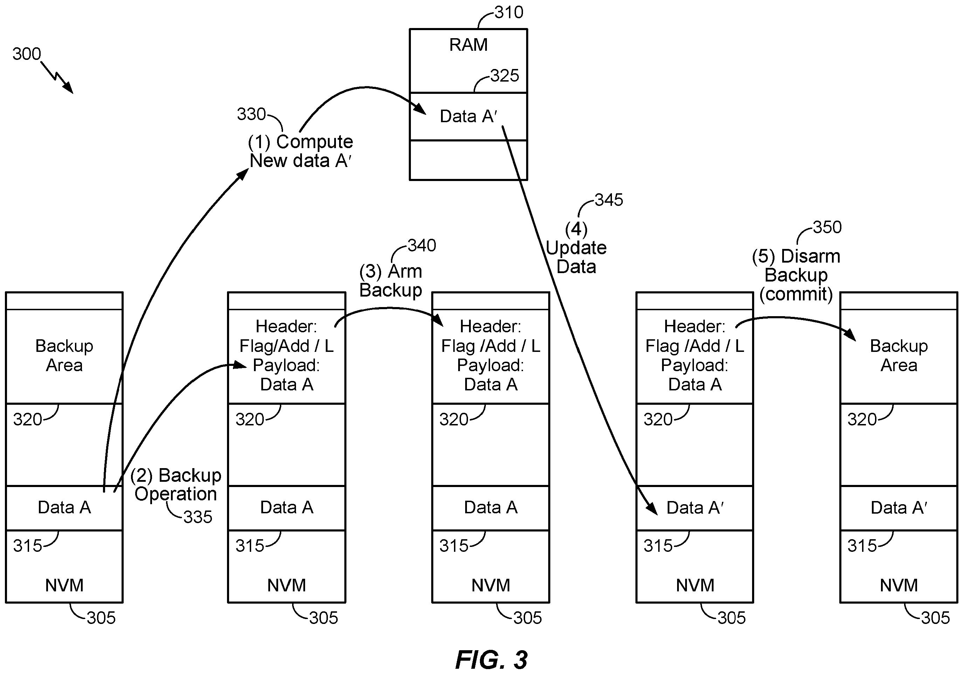

FIG. 3 depicts an exemplary method 300 for updating a non-volatile memory (NVM) 305. The method 300 for updating the NVM 305 can be performed by the apparatus described hereby, such as at least one of the user devices 106A-106L, the access points 104A-104G, or the user device 200.

The method 300 is implemented using the NVM 305 and a random access memory (RAM) 310 that is separate from the NVM 305. The NVM 305 is partitioned into a data storage partition 315 and a backup area 320. The RAM 310 can include a partition for data storage 325.

In step 330, data A is retrieved from the data storage partition 315 of the NVM 305 and new data A' is computed. The data A' is stored in the RAM 310, such as in the partition for data storage 325. The data A can be secure transaction data, such as is described herein. Also, the data A' can be secure transaction data, such as is described herein.

In step 335, the data A is stored in the backup area 320 of the NVM 305.

In step 340, a header flag is set (i.e., made valid) and stored in the backup area 320.

This enables (i.e., "arms") the backup for use subsequent to an interruption.

In step 345, the data A' is transferred from the RAM 310 to the data storage partition 315.

In step 350, the header flag is reset (i.e., made invalid) in the backup area 320. This disables (i.e., "disarms") the backup, and thus indicates that the backup feature is disabled.

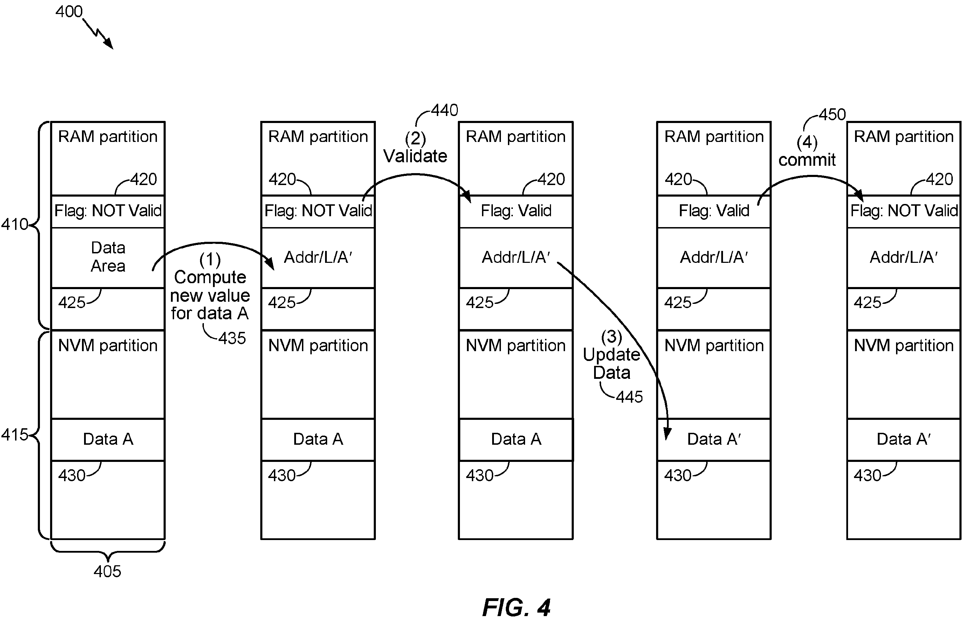

FIG. 4 depicts an exemplary method 400 for backing up a non-volatile random access memory (NV-RAM) 405. The method 400 for backing up the NV-RAM 405 can be performed by the apparatus described hereby, such as at least one of the user devices 106A-106L, the access points 104A-104G, or the user device 200. The method 400 is implemented using the NV-RAM 405. The NV-RAM 405 is partitioned into a RAM partition 410 and an NVM partition 415. The RAM partition 410 includes a region configured to store a flag 420 and a data area 425. The NVM partition 415 includes a region configured to store data 430. The RAM partition 410 and the NVM partition 415 can be contiguous or non-contiguous. Initial conditions include a copy of "data A" being stored in both the data area 425 and the region configured to store data 430.

In step 435, data A is retrieved from the data area 425 and new data A' is computed. The new data A' is stored in the data area 425. The data A can be secure transaction data, such as is described herein. Also, the new data A' can be secure transaction data, such as is described herein.

In step 440, a header flag is set (i.e., made valid) and stored in the region configured to store the flag 420.

In step 445, the new data A' is copied (i.e., updated) from the data area 425 in the RAM partition 410 to the region configured to store data 430 in the NVM partition 415.

In step 450, the header flag is reset (i.e., made invalid) and stored in the region configured to store the flag 420.

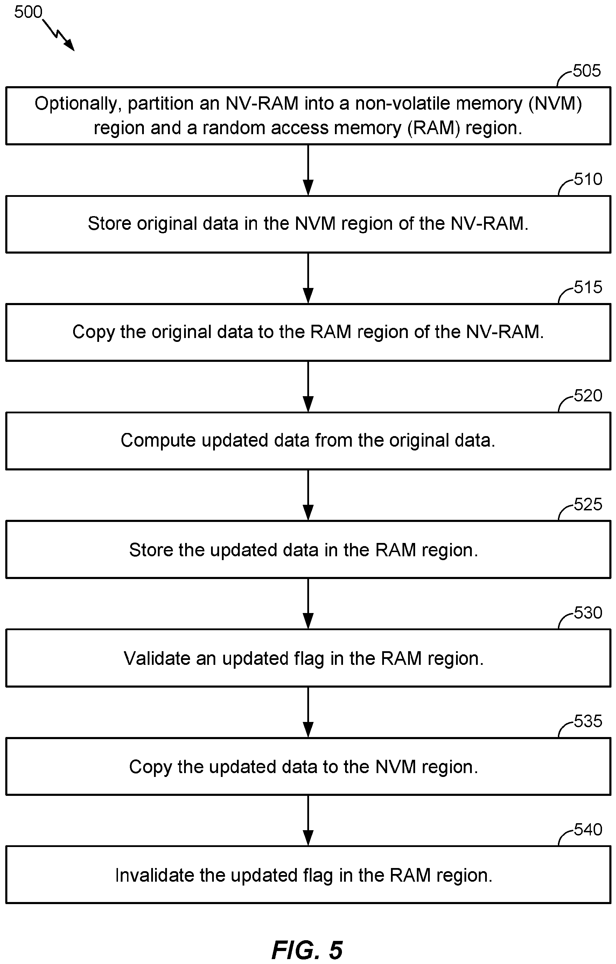

FIG. 5 depicts an exemplary method 500 for backing up a non-volatile random access memory (NV-RAM). The method 500 for backing up the NV-RAM can be performed by the apparatus described hereby, such as at least one of the user devices 106A-106L, the access points 104A-104G, and the user device 200. In an example, a plurality of update stages can exist and the method 500 is performed in an update stage in the plurality of update stages.

In optional block 505, the NV-RAM is partitioned into a non-volatile memory (NVM) region and a random access memory (RAM) region.

In block 510, original data is stored in the NVM region of the NV-RAM The original data can be secure transaction data, such as is described herein.

In block 515, the original data is copied to the RAM region of the NV-RAM The NVM region and the RAM region are different regions.

In block 520, updated data is computed from the original data. The updated data can be secure transaction data.

In block 525, the updated data is stored in the RAM region.

In block 530, an updated flag is validated in the RAM region (i.e., set). If multiple update stages are implemented, the updated flag can indicate completion of a specific update stage in a plurality of update stages.

In block 535, the updated data is copied to the NVM region.

In block 540, the updated flag in the RAM region is invalidated (i.e., reset).

If a single update stage exists, after an interruption, a status of the updated flag in the RAM region is determined. The interruption can be a power loss to the NV-RAM, a power loss to a memory management device (e.g., the memory manager 240), a power loss to a processor (e.g., the processor 205), a reboot, a reset, or a combination thereof. If the status of the updated flag is valid (i.e., set), then the updated data is copied to the NVM region and the updated flag in the RAM region is invalidated (i.e., reset).

If a plurality of update stages exist, after an interruption, a status of the updated flag in the RAM region is determined. The interruption can be a power loss to the NV-RAM, a power loss to a memory management device (e.g., the memory manager 240), a power loss to a processor (e.g., the processor 205), a reboot, a reset, or a combination thereof. The updated flag indicates completion of a specific update stage in a plurality of update stages. If the status of the updated flag is valid, then the updated data is copied to the NVM region. The NVM region is associated with the specific update stage. Also, if the status of the updated flag is valid (i.e., set), the updated flag in the RAM region is then invalidated (i.e., reset). The RAM region is associated with the specific update stage in the plurality of update stages.

The blocks and steps are not limiting of the examples. The blocks and steps can be combined and/or the order can be rearranged, as practicable.

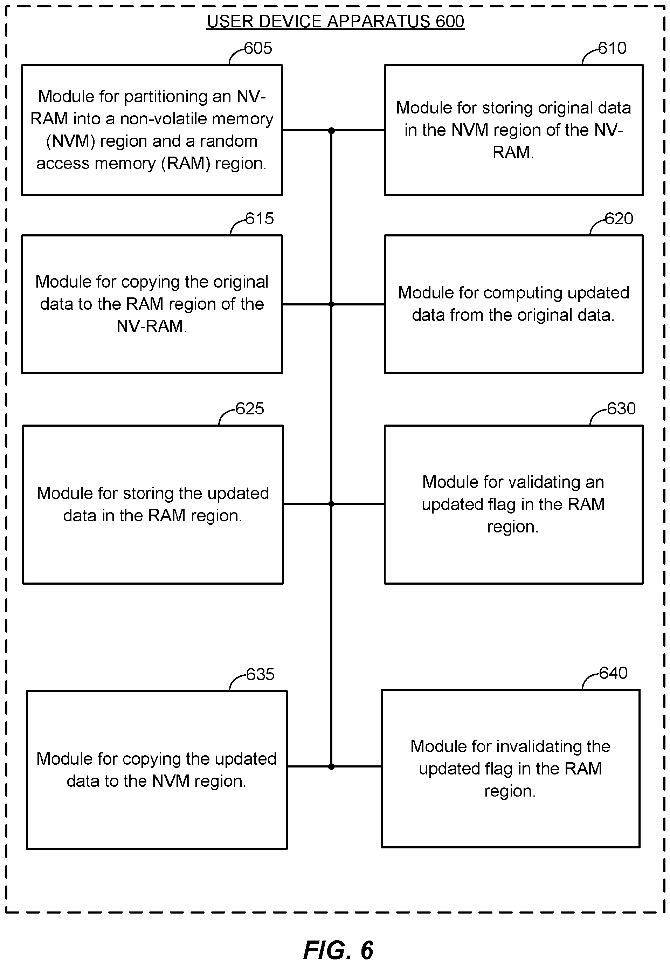

FIG. 6 depicts an example user device apparatus 600 (e.g., mobile equipment) that is represented as a series of interrelated functional modules and that is configured to provide or otherwise support techniques provided herein. A module for partitioning an NV-RAM into a non-volatile memory (NVM) region and a random access memory (RAM) region 605 can correspond at least in some aspects to, for example, a communication device as discussed herein. A module for storing original data in the NVM region of the NV-RAM 610 can correspond at least in some aspects to, for example, a communication device as discussed herein. A module for copying the original data to the RAM region of the NV-RAM 615 can correspond at least in some aspects to, for example, a communication device as discussed herein. A module for computing updated data from the original data 620 can correspond at least in some aspects to, for example, a communication device as discussed herein. A module for storing the updated data in the RAM region 625 can correspond at least in some aspects to, for example, a communication device as discussed herein. A module for validating an updated flag in the RAM region 630 can correspond at least in some aspects to, for example, a communication device as discussed herein. A module for copying the updated data to the NVM region 635 can correspond at least in some aspects to, for example, a communication device as discussed herein. A module for invalidating the updated flag in the RAM region 640 can correspond at least in some aspects to, for example, a communication device as discussed herein.

Further, those of skill in the art will appreciate that the exemplary logical blocks, modules, circuits, and steps described in the examples disclosed herein can be implemented as electronic hardware, computer software, or combinations of both, as practicable. To clearly illustrate this interchangeability of hardware and software, exemplary components, blocks, modules, circuits, and steps have been described herein generally in terms of their functionality. Whether such functionality is implemented as hardware or software depends upon the particular application and design constraints imposed on an overall system. Skilled artisans can implement the described functionality in different ways for each particular application, but such implementation decisions should not be interpreted as causing a departure from the scope of the present disclosure.

At least a portion of the methods, sequences, and/or algorithms described in connection with the examples disclosed herein can be embodied directly in hardware, in software executed by a processor (e.g., a processor described hereby), or in a combination of the two. In an example, a processor includes multiple discrete hardware components. A software module can reside in a storage medium (e.g., a memory device), such as a random-access memory (RAM), a flash memory, a read-only memory (ROM), an erasable programmable read-only memory (EPROM), an electrically erasable programmable read-only memory (EEPROM), a register, a hard disk, a removable disk, a compact disc read-only memory (CD-ROM), a Subscriber Identity Module (SIM) card, a Universal Subscriber Identity Module (USIM) card, and/or any other form of storage medium. An exemplary storage medium (e.g., a memory device) can be coupled to the processor such that the processor can read information from, and/or write information to, the storage medium. In an example, the storage medium can be integral with the processor.

Further, examples provided hereby are described in terms of sequences of actions to be performed by, for example, elements of a computing device. The actions described herein can be performed by a specific circuit (e.g., an application specific integrated circuit (ASIC)), by program instructions being executed by one or more processors, or by a combination of both. Additionally, a sequence of actions described herein can be considered to be entirely within any form of computer-readable storage medium having stored therein a corresponding set of computer instructions that, upon execution, would cause an associated processor (such as a special-purpose processor) to perform at least a portion of a function described herein. Thus, examples may be in a number of different forms, all of which have been contemplated to be within the scope of the disclosure. In addition, for each of the examples described herein, a corresponding electrical circuit of any such examples may be described herein as, for example, "logic configured to" perform a described action.

The disclosed devices and methods can be designed and can be configured into a computer-executable file that is in a Graphic Database System Two (GDSII) compatible format, an Open Artwork System Interchange Standard (OASIS) compatible format, and/or a GERBER (e.g., RS-274D, RS-274X, etc.) compatible format, which can be stored on a non-transitory (i.e., a non-transient) computer-readable media. The file can be provided to a fabrication handler who fabricates with a lithographic device, based on the file, an integrated device. Deposition of a material to form at least a portion of a structure described herein can be performed using deposition techniques such as physical vapor deposition (PVD, e.g., sputtering), plasma-enhanced chemical vapor deposition (PECVD), thermal chemical vapor deposition (thermal CVD), and/or spin-coating, and the like. Etching of a material to form at least a portion of a structure described herein can be performed using etching techniques such as plasma etching. In an example, the integrated device is on a semiconductor wafer. The semiconductor wafer can be cut into a semiconductor die and packaged into a semiconductor chip. The semiconductor chip can be employed in a device described herein (e.g., a mobile device, an access device, and/or the like).

At least one example provided hereby can include a non-transitory (i.e., a non-transient) machine-readable media and/or a non-transitory (i.e., a non-transient) computer-readable media storing processor-executable instructions configured to cause a processor (e.g., a special-purpose processor) to transform the processor and any other cooperating devices into a machine (e.g., a special-purpose processor) configured to perform at least a part of a function described hereby and/or a method described hereby. Performing at least a part of a function described hereby can include initiating at least a part of a function described hereby. In an example, execution of the stored instructions can transform a processor and any other cooperating devices into at least a part of an apparatus described hereby. A non-transitory (i.e., a non-transient) machine-readable media specifically excludes a transitory propagating signal. Further, at least one embodiment of the invention can include a computer-readable medium embodying at least a part of a method described herein. Accordingly, any means for performing the functions described herein are included in at least one embodiment of the invention. A non-transitory (i.e., a non-transient) machine-readable media specifically excludes a transitory propagating signal.

Nothing stated or depicted in this application is intended to dedicate any component, step, block, feature, object, benefit, advantage, or equivalent to the public, regardless of whether the component, step, block, feature, object, benefit, advantage, or the equivalent is recited in the claims.

While this disclosure describes examples, changes and modifications can be made to the examples disclosed herein without departing from the scope defined by the appended claims. The present disclosure is not intended to be limited to the specifically disclosed examples alone.

## Claims

1. A method (300) for updating a non-volatile random access memory, NV-RAM, (305, 405), the NV-RAM partitioned into a non-volatile memory, NVM, region (415) and a random access memory RAM region (410) the method comprising:
storing (510) original data in the non-volatile memory, NVM region(305, 405) of the NV-RAM, the NVM region (415) including a region configured to store data;
copying (515) the original data to a data area (425) of the random access memory, RAM region (410) of the NV-RAM, wherein the NVM region and the RAM region are different regions and wherein the RAM region is further partitioned into a region to store a flag (420); computing (520) updated data from the original data stored in the data area of the RAM (425);
storing (525) the updated data in the data area of the RAM region;
validating (530) an updated flag in the region to store the flag (420) of the RAM region;
copying (535) the updated data to the NVM region; and
invalidating (540) the updated flag in region to store the flag (420) of the RAM region.

2. The method of claim 1, further comprising:
determining, after an interruption, a status of the updated flag in the RAM region (410);
copying, if the status of the updated flag is valid, the updated data to the NVM region (405); and
invalidating, if the status of the updated flag is valid, the updated flag in the RAM region (410).

3. The method of claim 2, wherein the interruption is a power loss to the NV-RAM (405), a power loss to a memory management device, a power loss to a processor, a reboot, a reset, or a combination thereof.

4. The method of claim 1, further comprising:
determining, after an interruption, a status of the updated flag in the RAM region (405), wherein the updated flag indicates completion of a specific update stage in a plurality of update stages;
copying, if the status of the updated flag is valid, the updated data to the NVM region, wherein the NVM region is associated with the specific update stage; and
invalidating, if the status of the updated flag is valid, the updated flag in the RAM region, wherein the RAM region is associated with the specific update stage.

5. The method of claim 4, further comprising performing an update in a subsequent update stage in the plurality of update stages.

6. The method of claim 4, wherein the interruption is a power loss to the NV-RAM, a power loss to a memory management device, a power loss to a processor, a reboot, a reset, or a combination thereof.

7. The method of claim 1, wherein the updated flag indicates completion of a specific update stage in a plurality of update stages.

8. The method of claim 1, further comprising partitioning the NV-RAM into the NVM region and the RAM region.

9. The method of claim 1, wherein the original data is secure transaction data, the updated data is secure transaction data, or a combination thereof.

10. An apparatus configured to update a non-volatile random access memory, NV-RAM, the NV-RAM partitioned into a non-volatile memory, NVM, region (415) and a random access memory RAM region (410) comprising:
means for storing original data in the non-volatile memory, NVM region of the NV-RAM, the NVM region (415) including a region configured to store data;
means for copying (615) the original data to the random access memory, RAM region of the NV-RAM, wherein the NVM region and the RAM region are different regions and wherein the RAM region is further partitioned into a region to store a flag;
means for computing (620) updated data from the original data;
means for storing (625) the updated data in the RAM region;
means for validating (630) an updated flag in the RAM region;
means for copying (635) the updated data to the NVM region; and
means for invalidating (640) the updated flag in the RAM region.

11. The apparatus according to claim 10, comprising:
the NV-RAM, wherein the NV-RAM is configured with the non-volatile memory, NVM region and the random access memory, RAM region, and the NVM region and the RAM region are different regions; wherein the means for storing original data, means for copying the original data to the RAM region, means for computing updated data, means for storing the updated data, means for copying the updated data to the NVM region, and means for invalidating comprises a processor (205) coupled to the NV-RAM; and
a memory (210) coupled to the processor and configured to cause the processor to:
store original data in the NVM region;
copy the original data to the RAM region
compute updated data from the original data;
store the updated data in the RAM region;
validate an updated flag in the RAM region;
copy the updated data to the NVM region; and
invalidate the updated flag in the RAM region.

12. The apparatus of claim 11, wherein at least a part of the processor is integrated on a semiconductor die.

13. The apparatus of claim 11, further comprising at least one of a base station or a mobile device, with which the processor (205) is integrated.

14. The apparatus of claim 11, wherein:
the processor (205) is a microprocessor, a microcontroller, a digital signal processor, a field programmable gate array, a programmable logic device, an application-specific integrated circuit, a controller, a non-generic special-purpose processor, a state machine, gated logic, a discrete hardware component, a dedicated hardware finite state machine, or a combination thereof; and
the NV-RAM is a spin transfer torque magnetoresistive random access memory or a ferroelectric RAM

15. A non-transitory computer-readable medium, comprising processor-executable instructions stored thereon configured to cause a processor to implement the method according to any of claims 1 to 9.

## Patentansprüche

1. Ein Verfahren (300) zum Aktualisieren eines nicht flüchtigen Speichers mit wahlfreiem Zugriff bzw. NV-RAM (NV-RAM = non-volatile random access memory) (305, 405), wobei der NV-RAM in eine Region eines nicht flüchtigen Speichers bzw. NVM-Region (NVM = non-volatile memory) (415) und eine Region eines Speichers mit wahlfreiem Zugriff bzw. RAM-Region (RAM = random access memory) (410) partitioniert ist, wobei das Verfahren Folgendes aufweist:
Speichern (510) originaler Daten in der NVM-Region (305, 405) des NV-RAM, wobei die NVM-Region (415) eine Region beinhaltet, die zum Speichern von Daten konfiguriert ist;
Kopieren (515) der originalen Daten in einen Datenbereich (425) der RAM-Region (410) des NV-RAM, wobei die NVM-Region und die RAM-Region unterschiedliche Regionen sind, und wobei die RAM-Region weiter in eine Region zum Speichern eines Flags (420) partitioniert ist;
Berechnen (520) aktualisierter Daten aus den originalen Daten, die in dem Datenbereich des RAM (425) gespeichert sind;
Speichern (525) der aktualisierten Daten in dem Datenbereich der RAM-Region;
Validieren (530) eines aktualisierten Flags in der Region zum Speichern des Flags (420) der RAM-Region;
Kopieren (535) der aktualisierten Daten in die NVM-Region; und
Aufheben (540) der Gültigkeit des aktualisierten Flags in der Region zum Speichern des Flags (120) der RAM-Region.

2. Verfahren nach Anspruch 1, das weiter Folgendes aufweist:
Bestimmen, nach einer Unterbrechung, eines Status des aktualisierten Flags in der RAM-Region (410);
Kopieren, wenn der Status des aktualisierten Flags gültig ist, der aktualisierten Daten in die NVM-Region (405); und
Aufheben der Gültigkeit, wenn der Status des aktivierten Flags gültig ist, des aktualisierten Flags in der RAM-Region (110).

3. Verfahren nach Anspruch 2, wobei die Unterbrechung ein Leistungsverlust an den NV-RAM (405), ein Leistungsverlust an eine Speicherverwaltungseinrichtung, ein Leistungsverlust an einen Prozessor, ein Rebooten, ein Reset oder eine Kombination davon ist.

4. Verfahren nach Anspruch 1, das weiter Folgendes aufweist:
Bestimmen, nach einer Unterbrechung, eines Status des aktualisierten Flags in der RAM-Region (105), wobei das aktualisierte Flag einen Abschluss einer spezifischen Aktualisierungsstufe einer Vielzahl von Aktualisierungsstufen anzeigt;
Kopieren, wenn der Status des aktualisierten Flags gültig ist, der aktualisierten Daten in die NVM-Region, wobei die NVM-Region mit der spezifischen Aktualisierungsstufe assoziiert ist; und
Aufheben der Gültigkeit, wenn der Status des aktualisierten Flags gültig ist, des aktualisierten Flags in der RAM-Region, wobei die RAM-Region mit der spezifischen Aktualisierungsstufe assoziiert ist.

5. Verfahren nach Anspruch 4, das weiter Durchführen einer Aktualisierung in einer nachfolgenden Aktualisierungsstufe der Vielzahl von Aktualisierungsstufen aufweist.

6. Verfahren nach Anspruch 4, wobei die Unterbrechung ein Leistungsverlust an den NV-RAM, ein Leistungsverlust an eine Speicherverwaltungseinrichtung, ein Leistungsverlust an einen Prozessor, ein Rebooten, ein Reset oder eine Kombination davon ist.

7. Verfahren nach Anspruch 1, wobei das aktualisierte Flag einen Abschluss einer spezifischen Aktualisierungsstufe einer Vielzahl von Aktualisierungsstufen anzeigt.

8. Verfahren nach Anspruch 1, das weiter Partitionieren des NV-RAM in die NVM-Region und die RAM-Region aufweist.

9. Verfahren nach Anspruch 1, wobei die originalen Daten Daten einer sicheren Transaktion sind, die aktualisierten Daten Daten einer sicheren Transaktion sind oder eine Kombination davon.

10. Eine Vorrichtung, die konfiguriert ist zum Aktualisieren eines nicht flüchtigen Speichers mit wahlfreiem Zugriff bzw. NV-RAM (NV-RAM = non-volatile random access memory), wobei der NV-RAM in eine Region eines nicht flüchtigen Speichers bzw. NVM-Region (NVM = non-volatile memory) (415) und eine Region eines Speichers mit wahlfreiem Zugriff bzw. RAM-Region (RAM = random access memory) (410) partitioniert ist, die Folgendes aufweist:
Mittel zum Speichern originaler Daten in der NVM-Region des NV-RAM, wobei die NVM-Region (415) eine Region beinhaltet, die zum Speichern von Daten konfiguriert ist;
Mittel zum Kopieren (615) der originalen Daten in die RAM-Region des NV-RAM, wobei die NVM-Region und die RAM-Region unterschiedliche Regionen sind, und wobei die RAM-Region weiter in eine Region zum Speichern eines Flags partitioniert ist;
Mittel zum Berechnen (620) aktualisierter Daten aus den originalen Daten,
Mittel zum Speichern (625) der aktualisierten Daten in der RAM-Region;
Mittel zum Validieren (630) eines aktualisierten Flags in der RAM-Region;
Mittel zum Kopieren (635) der aktualisierten Daten in die NVM-Region; und
Mittel zum Aufheben (640) einer Gültigkeit des aktualisierten Flags in der RAM-Region.

11. Vorrichtung nach Anspruch 10, die Folgendes aufweist:
den NV-RAM, wobei der NV-RAM mit der NVM-Region und der RAM-Region konfiguriert ist, und die NVM-Region und die RAM-Region unterschiedliche Regionen sind; wobei die Mittel zum Speichern originaler Daten, die Mittel zum Kopieren der originalen Daten in die RAM-Region, die Mittel zum Berechnen aktualisierter Daten, die Mittel zum Speichern der aktualisierten Daten, die Mittel zum Kopieren der aktualisierten Daten in die NVM-Region und die Mittel zum Aufheben der Gültigkeit einen Prozessor (205) aufweisen, der an den NV-RAM gekoppelt ist; und
einen Speicher (210), der an den Prozessor gekoppelt ist und konfiguriert ist den Prozessor zu veranlassen zum:
Speichern originaler Daten in der NVM-Region;
Kopieren der originalen Daten in die RAM-Region;
Berechnen aktualisierter Daten aus den originalen Daten;
Speichern der aktualisierten Daten in der RAM-Region;
Validieren eines aktualisierten Flags in der RAM-Region;
Kopieren der aktualisierten Daten in die NVM-Region; und
Aufheben der Gültigkeit des aktualisierten Flags in der RAM-Region.

12. Vorrichtung nach Anspruch 11, wobei wenigstens ein Teil des Prozessors in einen Halbleiter-Die integriert ist.

13. Vorrichtung nach Anspruch 11, die weiter wenigstens eines von einer Basisstation oder einer Mobileinrichtung aufweist, mit der der Prozessor (205) integriert ist.

14. Vorrichtung nach Anspruch 11, wobei:
der Prozessor (205) ein Mikroprozessor, ein Mikrocontroller, ein Digitalsignalprozessor, eine feldprogrammierbare Gatteranordnung, eine programmierbare Logikeinrichtung, ein anwendungsspezifischer integrierter Schaltkreis, ein Controller, ein nicht generischer Prozessor mit speziellem Einsatzzweck, eine Zustandsmaschine, Gated-Logic, eine diskrete Hardware-Komponente, eine dedizierter Hardware-Zustandsautomat oder eine Kombination davon ist; und
der NV-RAM ein magnetoresistiver Spin-Transfer-Torque-Speicher mit wahlfreiem Zugriff oder ein ferroelektrischer RAM ist.

15. Ein nicht transitorisches computerlesbares Medium, das von einem Prozessor ausführbare Instruktionen aufweist, die darauf gespeichert sind, die konfiguriert sind einen Prozessor zu veranlassen das Verfahren nach einem der Ansprüche 1 bis 9 zu implementieren.

## Revendications

1. Procédé (300) pour mettre à jour une mémoire non volatile à accès aléatoire, NV-RAM, (305, 405), la mémoire NV-RAM étant partitionnée en une zone (415) de mémoire non volatile, NVM, et une zone de mémoire à accès aléatoire, RAM (410), le procédé comprenant les étapes consistant à :
stocker (510) des données originales dans la zone de la mémoire non volatile NVM (305, 405) de la mémoire NV-RAM, la zone NVM (415) comprenant une zone configurée pour stocker des données ;
copier (515) des données originales dans une région de données (425) de la zone de mémoire à accès aléatoire, RAM (410) de la mémoire NV-RAM, dans lequel la zone NVM et la zone RAM sont des zones différentes et dans lequel la zone RAM est encore partitionnée dans une zone pour stocker un indicateur (420) ;
calculer (520) des données mises à jour à partir des données originales stockées dans la région de données (425) de la zone RAM ;
stocker (525) les données mises à jour dans la région de données de la zone RAM;
valider (530) un indicateur mis à jour dans la zone pour stocker l'indicateur (420) de la zone RAM ;
copier (535) les données mises à jour dans la zone NVM ; et
invalider (540) l'indicateur mis à jour dans la zone pour stocker l'indicateur (420) de la zone RAM

2. Procédé selon la revendication 1, comprenant en outre les étapes consistant à :
déterminer, après une interruption, un état de l'indicateur mis à jour dans la zone RAM (410);
copier, si l'état de l'indicateur mis à jour est valide, les données mises à jour dans la zone NVM (405) ; et
invalider, si l'état de l'indicateur mis à jour est valide, l'indicateur mis à jour dans la zone RAM (410).

3. Procédé selon la revendication 2, dans lequel l'interruption est une perte d'alimentation de la mémoire NV-RAM (405), une perte d'alimentation d'un dispositif de gestion de mémoire, une perte d'alimentation d'un processeur, un redémarrage, une réinitialisation ou une combinaison de ceux-ci.

4. Procédé selon la revendication 1, comprenant en outre les étapes consistant à :
déterminer, après une interruption, un état de l'indicateur mis à jour dans la zone RAM (405), dans lequel l'indicateur mis à jour indique l'achèvement d'une étape de mise à jour spécifique dans une pluralité d'étapes de mise à jour ;
copier, si l'état de l'indicateur mis à jour est valide, les données mises à jour dans la zone NVM, la zone NVM étant associée à l'étape de mise à jour spécifique ; et
invalider, si l'état de l'indicateur mis à jour est valide, l'indicateur mis à jour dans la zone RAM, la zone RAM étant associée à l'étape de mise à jour spécifique.

5. Procédé selon la revendication 4, comprenant en outre la réalisation d'une mise à jour dans une étape de mise à jour ultérieure dans la pluralité d'étapes de mise à jour.

6. Procédé selon la revendication 4, dans lequel l'interruption est une perte d'alimentation de la mémoire NV-RAM, une perte d'alimentation d'un dispositif de gestion de mémoire, une perte d'alimentation d'un processeur, un redémarrage, une réinitialisation ou une combinaison de ceux-ci.

7. Procédé selon la revendication 1, dans lequel l'indicateur mis à jour indique l'achèvement d'une étape de mise à jour spécifique dans une pluralité d'étapes de mise à jour.

8. Procédé selon la revendication 1, comprenant en outre le partitionnement de la mémoire NV-RAM dans la zone NVM et la zone RAM.

9. Procédé selon la revendication 1, dans lequel les données originales sont des données de transaction sécurisées, les données mises à jour sont des données de transaction sécurisées, ou une combinaison de celles-ci.

10. Un appareil configuré pour mettre à jour une mémoire vive non volatile, NV-RAM, la mémoire NV-RAM étant partitionnée en une zone (415) de mémoire non volatile, NVM, et une zone de mémoire vive, RAM (410), comprenant
des moyens pour stocker des données originales dans la zone de mémoire non volatile, NVM de la mémoire NV-RAM, la zone NVM (415) comprenant une zone configurée pour stocker des données ;
des moyens pour copier (615) les données originales dans la zone de mémoire à accès aléatoire, RAM de la mémoire NV-RAM, dans lequel la zone NVM et la zone RAM sont des zones différentes et dans lequel la zone RAM est en outre partitionnée en une zone pour stocker un indicateur ;
des moyens pour calculer (620) des données mises à jour à partir des données originales ;
des moyens pour stocker (625) les données mises à jour dans la zone RAM ;
des moyens pour valider (630) un indicateur mis à jour dans la zone RAM ;
des moyens pour copier (635) les données mises à jour dans la zone NVM ; et
des moyens pour invalider (640) l'indicateur mis à jour dans la zone RAM.

11. Appareil selon la revendication 10, comprenant :
la mémoire NV-RAM, dans lequel la mémoire NV-RAM est configurée avec la zone de mémoire non volatile, NVM et la zone de mémoire à accès aléatoire, RAM, et la zone NVM et la zone RAM étant des zones différentes ; dans lequel les moyens pour stocker les données originales, les moyens pour copier les données originales dans la zone RAM, les moyens pour calculer les données mises à jour, les moyens pour stocker les données mises à jour, les moyens pour copier les données mises à jour dans la zone NVM, et les moyens pour invalider comprennent un processeur (205) couplé à la mémoire NV-RAM ; et
une mémoire (210) couplée au processeur et configurée pour amener le processeur à :
stocker les données originales dans la zone NVM ;
copier les données originales dans la zone RAM
calculer les données mises à jour à partir des données originales ;
stocker les données mises à jour dans la zone RAM ;
valider un indicateur mis à jour dans la zone RAM ;
copier les données mises à jour dans la zone NVM ; et
invalider l'indicateur mis à jour dans la zone RAM

12. Appareil selon la revendication 11, dans lequel au moins une partie du processeur est intégrée sur une puce semi-conductrice.

13. Appareil selon la revendication 11, comprenant en outre au moins l'un parmi une station de base ou un dispositif mobile, avec lequel le processeur (205) est intégré.

14. Appareil selon la revendication 11, dans lequel :
le processeur (205) est un microprocesseur, un microcontrôleur, un processeur de signal numérique, un réseau de portes programmables sur site, un dispositif logique programmable, un circuit intégré spécifique à l'application, un contrôleur, un processeur non-générique à usage spécial, une machine à états, une logique à portes, un composant matériel discret, une machine à états finis matérielle dédiée, ou une combinaison de ceux-ci ; et
la mémoire NV-RAM est une mémoire vive magnétorésistive écrite par couple de transfert de spin ou une RAM ferroélectrique.

15. Support non transitoire lisible par ordinateur, comprenant des instructions exécutables par processeur stockées sur celui-ci configuré pour amener un processeur à mettre en œuvre le procédé selon l'une quelconque des revendications 1 à 9.
